# EUROPÄISCHE PATENTSCHRIFT

(11) **EP 3 911 532 B1**
(45) Veröffentlichungstag und Bekanntmachung des Hinweises auf die Patenterteilung: **08.02.2023**
(21) Anmeldenummer: 19835268.4
(22) Anmeldetag: 17.12.2019
(51) Int. Cl.: B60K 37/02, G06F 3/01, G06F 3/042

(54) **BEDIENSYSTEM MIT PORTABLER SCHNITTSTELLENEINHEIT SOWIE KRAFTFAHRZEUG MIT DEM BEDIENSYSTEM**
OPERATING SYSTEM WITH PORTABLE INTERFACE UNIT, AND MOTOR VEHICLE CONTAINING THE OPERATING SYSTEM
SYSTÈME DE COMMANDE AVEC UNITÉ D'INTERFACE PORTABLE AINSI QUE VÉHICULE AUTOMOBILE ÉQUIPÉ DU SYSTÈME DE COMMANDE

(30) Priorität: 18.01.2019 DE 102019200632
(43) Veröffentlichungstag der Anmeldung: 24.11.2021
(73) Patentinhaber: Audi AG, 85045 Ingolstadt (DE)
(72) Erfinder: LOTTES, Daniel, 93346 Ihrlerstein (DE); WEIß, Philipp, 85049 Ingolstadt (DE)
(74) Vertreter: Hofstetter, Schurack & Partner
(86) Internationale Anmeldenummer: PCT/EP2019/085809
(87) Internationale Veröffentlichungsnummer: WO 2020/148060

(56) Entgegenhaltungen:
- EP-A1- 1 798 588
- FR-A1- 3 047 933
- US-A1- 2017 253 191
- US-B1- 8 509 986
- US-B2- 8 723 787

## Beschreibung

Die Erfindung betrifft ein Bediensystem für ein Kraftfahrzeug, mittels welchem einem Benutzer ein Anzeigeinhalt an einer Benutzerschnittstelle angezeigt werden kann, die hier als Schnittstelleneinheit bezeichnet ist. Die Schnittstelleneinheit ist als eine portable Fernbedienung, also als ein frei im Kraftfahrzeug beweglicher, portabler Gegenstand ausgestaltet. Zu der Erfindung gehört auch ein Kraftfahrzeug mit einem solchen Bediensystem.

In einem Kraftfahrzeug kann es ermöglicht sein, dass ein Insasse oder Benutzer den Fahrzeugsitz in eine Liegeposition oder Relaxposition bringt, in welcher die Rückenlehne im Vergleich zu einer normalen, aufrechten Sitzposition nach hinten geneigt ist. Dies kann beispielsweise für eine pilotierte Fahrt auch dem Fahrer ermöglicht sein. Lehnt sich nun ein Benutzer in den Fahrzeugsitz zurück, so wird das manuelle Bedienen von Bedienelementen beispielsweise an der Schalttafel aufgrund des vergrößerten Abstands unmöglich oder erfordert es, dass sich der Benutzer wieder im Fahrzeugsitz aufrichtet.

Um dies zu vermeiden, kann vorgesehen sein, in dem Kraftfahrzeug eine Fernbedienung bereitzustellen, die der Benutzer auch in der zurückgelehnten Liegeposition benutzen kann, um zumindest eine Fahrzeugkomponente, also beispielsweise eine Medienwiedergabe zum Abspielen von Musikinhalten oder Videoinhalten, zu bedienen. Allerdings stellt eine solche Fernbedienung einen losen Gegenstand dar, der beispielsweise bei einer Kurvenfahrt und/oder bei einer Bremsung und/oder beim Beschleunigen im Kraftfahrzeug verrutschen kann und beispielsweise unter einen Fahrsitz fallen kann. Zudem möchte man vermeiden, dass ein solcher loser Gegenstand beim Fallen gegen eine Person fällt, was bei einem festen Schalengehäuse einer Fernbedienung schmerzhaft sein könnte.

Daher ist man an einem Bediensystem interessiert, welches die Bedienung zumindest einer Fahrzeugkomponente im Kraftfahrzeug auch in einer zurückgelehnten Position des Benutzers ermöglicht, ohne dass hierbei eine Fernbedienung mit festem Schalengehäuse notwendig ist.

Aus der US 8,723,787 B2 ist ein Bediensystem bekannt, das zum einen eine Projektionsplatte aufweist, die ein Benutzer in der Hand halten kann, und zum anderen mehrere Projektoren vorsieht, die abwechselnd auf der Projektionsplatte ein Anzeigebild projizieren können. Je nachdem, welcher Projektor einen günstigen Projektionswinkel auf die Projektionsplatte hat, übernimmt das Projizieren. Hierdurch wird eine optische Verzerrung minimiert, die sich ansonsten bei schräg stehender Projektionsplatte ergeben würde. Nachteilig bei diesem System ist, dass mehrere Projektoren notwendig sind, wenn in einem Kraftfahrzeug eine solche Projektionsplatte vom Benutzer in unterschiedlichen Haltewinkeln gehalten können werden soll. Dies erfordert zu viel Bauraum.

Aus der US 8,509,986 B1 ist für eine Autowerkstatt ein Projektionssystem bekannt, das einen Anzeigeinhalt sowie Bedienfelder zum Eingeben einer Benutzereingabe auf eine Projektionsfläche projiziert. Somit kann in der Werkstatt zum Auslesen und Bedienen eines Diagnosecomputers eines Kraftfahrzeugs beispielsweise ein Boden in der Werkstatt oder eine Platte einer Werkbank als Projektionsfläche verwendet werden.

Der Erfindung liegt die Aufgabe zugrunde, in einem Kraftfahrzeug ein Bediensystem für eine Nutzung zumindest einer Fahrzeugkomponente bereitzustellen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Bediensystem für ein Kraftfahrzeug bereitgestellt. In der eingangs beschriebenen Weise weist das Bediensystem eine Schnittstelleneinheit mit einer Bedienoberfläche sowie eine Projektionseinheit auf. Die Projektionseinheit ist dazu eingerichtet, einen Anzeigeinhalt, beispielsweise ein Bedienmenü oder einen Medieninhalt, von außen auf die Bedienoberfläche der Schnittstelleneinheit zu projizieren. Mit "von außen" ist gemeint, dass die Projektionseinheit nicht in die Schnittstelleneinheit integriert ist und von innen heraus die Bedienoberfläche hinterleuchtet, sondern dass die Projektionseinheit getrennt von der Schnittstelleneinheit im Kraftfahrzeug angeordnet oder bereitgestellt werden kann und die Projektionseinheit die Bedienoberfläche von außen mit Licht bescheint oder beleuchtet, um den Anzeigeinhalt darzustellen. Die Schnittstelleneinheit ist als ein frei im Kraftfahrzeug beweglicher, portabler Gegenstand ausgestaltet. Es kann sich hierbei beispielsweise um ein Brett oder, beispielsweise für Kinder, um eine Figur handeln.

Um nun bei einer Bewegung oder Veränderung der Raumstellung der Schnittstelleneinheit den Anzeigeinhalt weiterhin auf die Bedienoberfläche zu projizieren, sind bei dem erfindungsgemäßen Bediensystem nicht mehrere unterschiedliche Projektionseinheiten notwendig. Stattdessen ist eine Erfassungseinrichtung dazu eingerichtet, einen Neigungsvektor einer relativen Neigung der Bedienoberfläche bezüglich der Projektionseinheit zu ermitteln. Mit anderen Worten wird durch die Erfassungseinrichtung die Schräglage oder relative Lage der Bedienoberfläche bezüglich der Projektionseinheit ermittelt. Dadurch ist also beispielsweise bekannt, in welchem Winkel die Projektionsoberfläche bezüglich einer Projektionsrichtung der Projektionseinheit angeordnet oder ausgerichtet ist. Zusätzlich kann auch eine Entfernung der Bedienoberfläche zur Projektionseinheit durch die Erfassungseinrichtung ermittelt werden.

Bei dem Bediensystem ist eine Bildverarbeitungseinrichtung dazu eingerichtet, den besagten Anzeigeinhalt, der auf die Bedienoberfläche projiziert wird, zu erzeugen, indem die Bildverarbeitungseinrichtung einen Originalanzeigeinhalt mittels einer vorbestimmten Vorverzerrungsfunktion in Abhängigkeit von dem ermittelten Neigungsvektor grafisch verzerrt. Mit anderen Worten basiert der Anzeigeinhalt auf einem Originalanzeigeinhalt, also beispielsweise auf Grafikdaten oder Bilddaten, welche den Anzeigeinhalt in unverzerrtem Zustand oder Originalzustand darstellen oder beschreiben. Mittels einer Vorverzerrungsfunktion wird daraus der zu projizierende Anzeigeinhalt gemacht, der grafisch verzerrt ist, also beispielsweise in eine Richtung gedehnt oder gestaucht ist. Die Vorverzerrungsfunktion ist hierbei invers zu einer optischen Verzerrung eingestellt, die sich beim Projizieren des Anzeigeinhalts auf die Bedienoberfläche aufgrund der Neigung ergibt. Denn wird der Anzeigeinhalt auf die bezüglich der Projektionsrichtung schräg oder geneigt ausgerichtete Bedienoberfläche projiziert, so ergibt sich hierdurch eine Verzerrung, beispielsweise eine Längenveränderung. Die Vorverzerrungsfunktion fügt dem Anzeigeinhalt eine hierzu inverse Verzerrung zu oder bei. Durch die inverse Verzerrung (also die Vorverzerrung) gemäß der Vorverzerrungsfunktion und die anschließende optische Verzerrung beim Projizieren des Anzeigeinhalts auf die Bedienoberfläche ergibt sich somit insgesamt auf der Bedienoberfläche wieder der Originalanzeigeinhalt, also eine verzerrungsfreie Widergabe. Mit anderen Worten kompensiert die Vorverzerrungsfunktion durch die grafische Vorverzerrung diejenige optische Verzerrung, die sich beim Projizieren des Anzeigeinhalts auf die geneigte Bedienoberfläche ergeben wird. Die Vorverzerrung oder inverse Verzerrung ist also ein digitaler oder datentechnischer Vorgang, während die optische Verzerrung sich physikalisch auf der Bedienoberfläche ergibt. Somit wird also die Schräglage der Schnittstelleneinheit bezüglich der Projektionseinheit dahingehend kompensiert, dass dem Benutzer bei Verändern der Neigung dynamisch ein stets angepasster Anzeigeinhalt präsentiert oder projiziert wird, sodass der projizierte Anzeigeinhalt auch bei einer Veränderung der Neigung der Schnittstelleneinheit unverändert dargestellt oder für den Benutzer verzerrungsfrei lesbar oder wahrnehmbar gemacht wird.

Durch die Erfindung ergibt sich der Vorteil, dass trotz Verwendung einer einzelnen Projektionseinheit, welche den Anzeigeinhalt stets aus derselben Richtung im Kraftfahrzeug auf die Schnittstelleneinheit projiziert, dennoch eine optische Verzerrung kompensiert ist, die sich bei einem Neigen der Schnittstelleneinheit bezüglich der Projektionseinheit ansonsten den Originalanzeigeinhalt verfälscht wiedergeben würde. Diese Kompensation wird hier auch als ein "dynamic projection mapping" (dynamische Projektionsabbildung) bezeichnet.

Die Erfindung umfasst auch Ausführungsformen, durch die sich zusätzliche Vorteile ergeben.

In einer Ausführungsform weist die Schnittstelleneinheit mehrere mögliche Bedienoberflächen auf, beispielsweise je eine an einer Vorderseite und einer Rückseite. Die Erfassungseinrichtung ist dazu eingerichtet, als aktuelle Bedienoberfläche diejenige der möglichen Bedienoberflächen auszuwählen, deren Normalenvektor den kleinsten Winkel zu einer Verbindungslinie zwischen der Schnittstelleneinheit und der Projektionseinheit aufweist. Mit anderen Worten wird diejenige Bedienoberfläche ausgewählt, welche der Projektionseinheit zugewandt ist, also mit ihrem Normalenvektor am nächsten zu der Projektionseinheit weist oder zeigt. Der jeweilige Normalenvektor der möglichen Bedienoberfläche ist ein senkrecht auf der jeweiligen Bedienoberfläche ausgerichteter (gedachter) Vektor. Durch Auswählen zwischen unterschiedlichen, möglichen Bedienoberflächen ergibt sich der Vorteil, dass bei einer zu extremen Neigung einer Bedienoberfläche, bei welcher dann die Vorverzerrungsfunktion die durch das Projizieren bewirkte optische Verzerrung nicht mehr ausgleichen kann, auf eine andere Bedienoberfläche ausgewichen werden kann.

In einer Ausführungsform ist jeder der möglichen Bedienoberflächen ein vorbestimmter Originalanzeigeinhalt zugeordnet. Hierbei ist für jede mögliche Bedienoberfläche ein anderer Originalanzeigeinhalt vorgesehen. Die Bildverarbeitungseinrichtung, welche aus dem jeweiligen Originalanzeigeinhalt mittels der Vorverzerrungsfunktion den eigentlichen, zu projizierenden Anzeigeinhalt erzeugt, ist dazu eingerichtet, in Abhängigkeit davon, welche der möglichen Bedienoberflächen als aktuelle verwendete Bedienoberfläche ausgewählt ist, den zugeordneten Originalanzeigeinhalt auszuwählen. Mit anderen Worten kann die Schnittstelleneinheit multifunktional ausgestaltet sein, indem für jede mögliche Bedienoberfläche ein anderer Originalanzeigeinhalt vorgesehen ist. Durch Umdrehen oder Kippen der Schnittstelleneinheit kann ein Benutzer dann zwischen den unterschiedlichen Originalanzeigeinhalten auswählen. So kann beispielsweise als ein Originalanzeigeinhalt ein Bedienmenü oder eine Ausgabe einer ersten Fahrzeugkomponente des Kraftfahrzeugs und einer zweiten Bedienoberfläche ein Bedienmenü oder eine Ausgabe einer anderen, zweiten Fahrzeugkomponente des Kraftfahrzeugs zugeordnet sein. So kann der Benutzer beispielsweise zwischen einem Bedienmenü einer Klimatisierungseinrichtung des Kraftfahrzeugs und einer Videowiedergabeeinrichtung umschalten.

In einer Ausführungsform umfasst die besagte Erfassungseinrichtung, welche den Neigungsvektor ermitteln soll, zumindest ein an der Schnittstelleneinheit vorgesehenes oder angeordnetes Wiedererkennungsmerkmal sowie eine von der Schnittstelleneinheit beabstandete, also von dieser verschiedene, und für das zumindest eine Wiedererkennungsmerkmal sensitive Sensoreinrichtung. Die Sensoreinrichtung kann also von außen im Kraftfahrzeug das zumindest eine Wiedererkennungsmerkmal an der Schnittstelleneinheit sensieren oder erfassen. Diese Sensoreinrichtung ist dazu eingerichtet, den Neigungsvektor durch berührungsloses Detektieren einer Raumlage des zumindest einen Wiedererkennungsmerkmals zu ermitteln. Mit anderen Worten kann sich die Erfassungseinrichtung mittels ihrer Sensoreinrichtung an dem zumindest einen Wiedererkennungsmerkmal orientieren, um den Neigungsvektor zu bestimmen. So wird das zumindest eine Wiedererkennungsmerkmal in Bezug auf seine Lage im Raum erfasst, also die relative Lage oder Position des zumindest einen Wiedererkennungsmerkmals bezüglich der Sensoreinrichtung ermittelt. Das zumindest eine Wiedererkennungsmerkmal kann zumindest ein an der Schnittstelleneinheit zugeordnetes Markierelement, beispielsweise eine Leuchtdiode für Licht im sichtbaren Spektrum und/oder im Infrarotbereich, und/oder einen Aufkleber und/oder eine grafische Markierung oder Textur umfassen. Zusätzlich oder alternativ dazu kann als Wiedererkennungsmerkmal eine vorbekannte Form der Schnittstelleneinheit, beispielsweise deren dreidimensionale Form und/oder Kontur oder Umriss, zugrundegelegt werden. Als Sensoreinrichtung kann beispielsweise eine Kamera oder es können mehrere Kameras vorgesehen sein.

In einer Ausführungsform ist vorgesehen, dass der Benutzer an der Schnittstelleneinheit auch eine Bedieneingabe tätigen oder eingeben kann. Hierzu ist eine Eingabeeinrichtung dazu eingerichtet, die Bedieneingabe, die der Benutzer an der Schnittstelleneinheit tätigt, zu erfassen und in Abhängigkeit von der erfassten Bedieneingabe sowie einer aktuell betriebenen und den aktuellen Originalanzeigeinhalt bestimmenden Bedienfunktion ein Steuersignal zum Steuern zumindest einer Fahrzeugkomponente des Kraftfahrzeugs zu erzeugen. In Abhängigkeit davon, welche Bedienfunktion (beispielsweise Klimatisierungseinheit, Medienwiedergabe, Sitzpositionierung, Telefonie, Infotainment) aktuell betrieben oder aktiviert ist und in Abhängigkeit davon, welche Bedieneingabe der Benutzer an der Schnittstelleneinheit eingibt, wird also entsprechend ein Steuersignal erzeugt, durch welches die durch die Bedienfunktion gesteuerte zumindest eine Fahrzeugkomponente steuert oder in dieser eine Funktion startet oder konfiguriert. Somit kann der Benutzer auf der Schnittstelleneinheit den Anzeigeinhalt betrachten, der beispielsweise ein Bedienmenü und/oder zumindest eine Bedienfläche oder Schaltfläche darstellt oder anzeigt, und dann durch Berühren der Schnittstelleneinheit an einer Stelle, an welcher ein Menüeintrag oder eine Bedienfläche projiziert ist, entsprechend eine Bedienfunktion auslösen.

In einer Ausführungsform umfasst die besagte Eingabeeinrichtung eine sogenannte TOF-Kamera (Time-of-Flight-Kamera), welche dreidimensionale Bilddaten von der Schnittstelleneinheit und deren Umgebung erzeugen kann. Die Eingabeeinrichtung ist dazu eingerichtet, die Bedieneingabe anhand der durch die TOF-Kamera erzeugten Bilddaten, welche eine Relativposition eines Eingabeelements des Benutzers bezüglich der Schnittstelleneinheit beschreiben, zu erfassen. Mit anderen Worten wird also anhand der dreidimensionalen Bilddaten der TOF-Kamera erkannt, wo das Eingabeelement die Schnittstelleneinheit berührt oder auf welchen Teil der Schnittstelleneinheit das Eingabeelement zeigt. Als Eingabeelement kann ein Benutzer beispielsweise einen Finger oder mehrere Finger oder eine Hand oder einen Stift benutzen. Zusätzlich oder alternativ zur TOF-Kamera kann die Eingabeeinrichtung ein an der Schnittstelleneinheit angeordnetes Touchpad umfassen. Ein solches Touchpad ermöglicht eine ortsaufgelöste Berührungserfassung und/oder Annäherungserfassung (Berührstellenneerfassung mit XY-Koordinaten). Ein Touchpad kann beispielsweise auf der Grundlage einer kapazitiven Sensorik mit mehreren kapazitiven Näherungssensoren und/oder Berührungssensoren vorsehen. Insgesamt ist also an der Schnittstelleneinheit eine Touchsensierung oder Berührungssensierung mittels der Eingabeeinrichtung bevorzugt.

In einer Ausführungsform ist die Schnittstelleneinheit aus einem elastischen Material gebildet. Hierdurch ergibt sich der Vorteil, dass die Schnittstelleneinheit bei einer Kollision mit einer Person nachgibt und/oder sich verformt, aber im unbelasteten Zustand oder kraftfreien Zustand eine vorbestimmte Originalform annimmt, in welcher die Bedienoberfläche eine vorbestimmte geometrische Eigenschaft aufweist. Zusätzlich oder alternativ zu einem elastischen Material kann bei der Schnittstelleneinheit vorgesehen sein, dass diese aus einem Schaumstoff gebildet und/oder mit einem Kunstleder (zum Beispiel Alcantara) ausgestattet ist. Die Verwendung eines Schaumstoffs weist den Vorteil auf, dass die Schnittstelleneinheit ein geringeres Eigengewicht aufweist, als ein Körper gleichen Volumens mit massivem Material. Die Verwendung eines Kunstleders weist den Vorteil auf, dass die Schnittstelleneinheit rutschsicher in einer Hand gehalten werden kann.

In einer Ausführungsform weist die Schnittstelleneinheit in einem Außenprofil, also an einer Außenoberfläche, ausschließlich gerundete Ecken und Kanten auf, deren Rundungsradius größer als fünf Millimeter ist. Mit anderen Worten weist die Schnittstelleneinheit nur stumpfe Ecken und Kanten auf. Hierdurch sind mechanische Belastungsspitzen, wie sie an einer Ecke oder Kante mit geringerem Rundungsradius auftreten können, vermieden.

In einer Ausführungsform ist die Bedienoberfläche weiß ausgestaltet. Mit anderen Worten ist eine neutrale Farbe, nämlich weiß, für die Bedienoberfläche vorgesehen. Hierdurch wird eine farbliche Verfälschung des Anzeigeinhalts beim Projizieren oder Darstellen auf der Bedienoberfläche vermieden.

In einer Ausführungsform ist die Schnittstelleneinheit als eine Platte mit ebener Bedienoberfläche ausgestaltet. Die ebene Ausgestaltung der Bedienoberfläche weist den Vorteil auf, dass eine zusätzliche optische Verzerrung aufgrund von Unebenheiten der Bedienoberfläche vermieden ist.

Zu der Erfindung gehört auch ein Kraftfahrzeug, in welchem eine Ausführungsform des erfindungsgemäßen Bediensystems bereitgestellt ist. Das erfindungsgemäße Kraftfahrzeug ist bevorzugt als Kraftwagen, insbesondere als Personenkraftwagen oder Lastkraftwagen, oder als Personenbus, ausgestaltet. In dem Kraftfahrzeug kann natürlich auch eine Anordnung mehrerer Bediensysteme der beschriebenen Art vorgesehen sein, sodass hierdurch mehrere Passagiere des Kraftfahrzeugs mit einer Schnittstelleneinheit versorgt werden können.

Zu der Erfindung gehören auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs; und
- Fig. 2: eine schematische Darstellung eines Bediensystems, wie es im Kraftfahrzeug von Fig. 1 bereitgestellt sein kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden.

Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

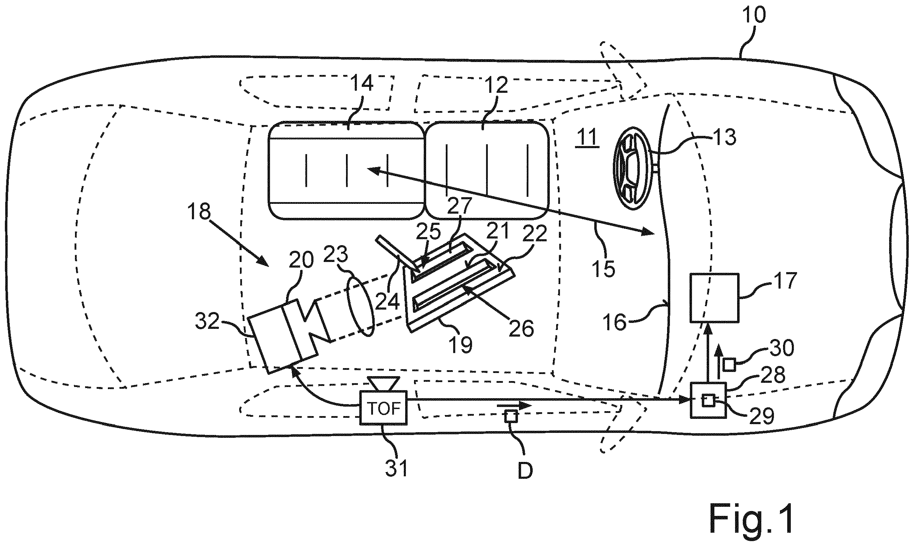

Fig. 1 zeigt in schematisierter Darstellung aus einer Vogelperspektive von einem Kraftfahrzeug 10 einen Fahrgastraum 11. Zur Orientierung sind ein Fahrzeugsitz 12 und ein Lenkrad 13 dargestellt. Der Fahrzeugsitz 12 kann in einer Liegestellung oder Liegeposition eingestellt sein, bei welcher eine Rückenlehne 14 des Fahrzeugsitzes 12 im Verhältnis zu einer aufrechten Sitzstellung nach hinten geneigt oder zum Boden hin verschwenkt ist. Hierdurch kann ein Abstand 15 zwischen Schulter eines in dem Fahrzeugsitz 12 liegenden Benutzers (nicht dargestellt) und beispielsweise einer Schalttafel 16 derart groß sein, dass der Benutzer in der liegenden Position mit einem Arm die Schalttafel 16 nicht mehr erreichen kann. Dennoch ist es in dem Kraftfahrzeug 10 dem Benutzer ermöglicht, zumindest eine Fahrzeugkomponente 17 vom Fahrzeugsitz 12 aus in der Liegeposition zu bedienen und/oder deren Ausgabe anzuschauen.

Hierzu ist in dem Kraftfahrzeug 10 ein Bediensystem 18 bereitgestellt, welches zum einen für den Benutzer eine portable Schnittstelleneinheit 19 vorsieht, die der Benutzer beispielsweise in einer Hand halten kann, und zum anderen eine Projektionseinheit 20, welche einen Anzeigeinhalt 21 auf eine Bedienoberfläche 22 der Schnittstelleneinheit 19 mittels Licht 23 projizieren kann. Die Projektionseinheit 20 kann in einem Abstand zur Schnittstelleneinheit 19 in dem Kraftfahrzeug 10 bereitgestellt sein, beispielsweise kann sie an einer Decke des Fahrgastraums 11 angeordnet sein. Der Benutzer kann mittels eines Eingabeelements 24 eine Bedieneingabe 25 an der Bedienoberfläche 22 tätigen. Beispielsweise kann der Anzeigeinhalt 21 ein Bedienmenü 26 darstellen und mittels des Eingabeelements 24 kann der Benutzer ein Menüelement oder eine Bedienfläche 27 des Bedienmenüs 26 auswählen oder aktivieren. Eine Eingabeeinrichtung 28 kann diese Bedieneingabe 25 registrieren und in Abhängigkeit von der Bedieneingabe 25 und einer aktuell aktivierten Bedienfunktion 29 kann die Eingabeeinrichtung 28 ein Steuersignal 30 für die zumindest eine Fahrzeugkomponente 17 erzeugen, um gemäß der Auswahl oder Bedieneingabe 25 des Benutzers die zumindest eine Fahrzeugkomponente 17 anzusteuern.

Als ein Bestandteil der Eingabeeinrichtung 28 kann ein Touchpad an der Schnittstelleneinheit 19 selbst bereitgestellt sein. Alternativ dazu kann die Schnittstelleneinheit 19 vollständig sensorlos und/oder vollständig frei von elektronischen Komponenten sein. Beispielsweise kann die Schnittstelleneinheit 19 eine Platte aus einem Kunststoff sein. Die Eingabeeinrichtung 28 kann dann die Bedieneingabe 25 mittels einer Erfassungseinrichtung 31, insbesondere einer Kamera TOF, eine Relativlage des Eingabeelements 24 bezüglich der Schnittstelleneinheit 19 erfassen. Die Kamera TOF kann vom Fahrgastraum 11 Bilddaten D erzeugen, in welchen die Schnittstelleneinheit 19 und deren Umgebung abgebildet oder beschrieben ist. Die Kamera TOF kann insbesondere eine Time-of-Flight-Kamera sein.

Da der Anzeigeinhalt 21 auf die Bedienoberfläche 22 projiziert ist, ergibt sich eine optische Verzerrung des Anzeigeinhalts 21 in Abhängigkeit davon, in welchem Winkel oder mit welcher Neigung die Bedienoberfläche 22 in Bezug auf die Projektionseinheit 20 gehalten wird. Grund dafür ist, dass das Licht 23 je nach Neigung der Bedienoberfläche 22 schräg auf diese fällt.

Dennoch nimmt bei dem Kraftfahrzeug 10 mit dessen Bediensystem 18 der Benutzer einen Anzeigeinhalt 21 war, dessen Verzerrung sich nicht ändert oder unverändert bleibt, wenn der Benutzer die Schnittstelleneinheit 19 bewegt oder verschwenkt oder kippt, sodass sich deren Neigung relativ zur Projektionseinheit 20 verändert. Grund dafür ist, dass ein "dynamic projection mapping" bereitgestellt ist, wofür in dem Bediensystem 18 eine Bildverarbeitungseinrichtung 32 bereitgestellt sein kann.

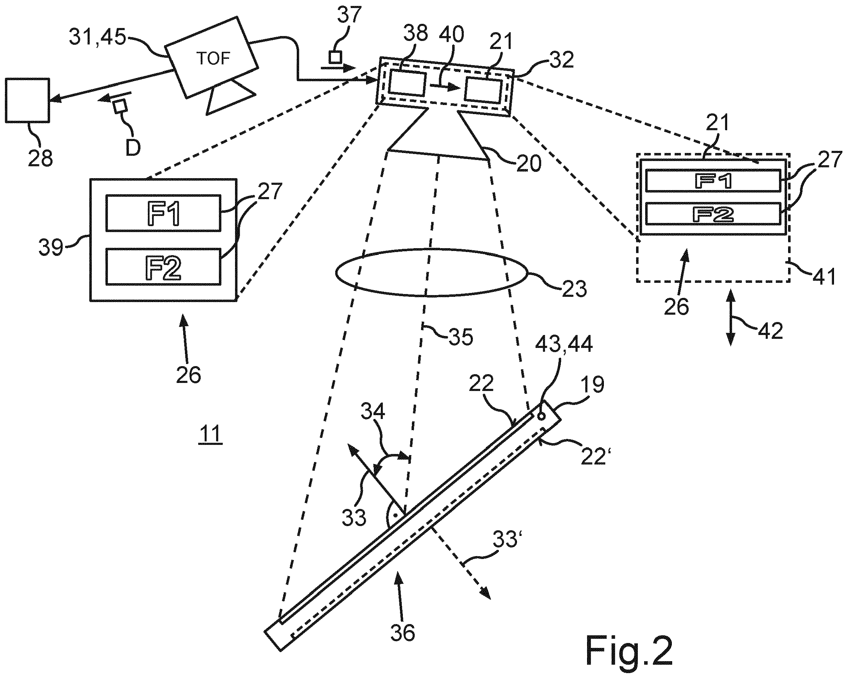

Eine mögliche Funktionsweise der Bildverarbeitungseinrichtung 32 ist im Zusammenhang mit Fig. 2 beschrieben.

Fig. 2 zeigt noch einmal in einer Seitenansicht schematisch die Projektionseinheit 20, die Schnittstelleneinheit 19, die Erfassungseinrichtung 31 beispielsweise in Form der Kamera, insbesondere der TOF-Kamera und die Bildverarbeitungseinrichtung 32. Die Bildverarbeitungseinrichtung 32 kann beispielsweise auf der Grundlage eine Prozessoreinrichtung mit zumindest einem Mikroprozessor und/oder zumindest einem Mikrocontroller bereitgestellt sein. Die beschriebenen Verfahrensschritte können auf der Grundlage einer Software für die Prozessoreinrichtung implementiert sein. Die Software kann in einem Datenspeicher der Prozessoreinrichtung gespeichert sein.

Dargestellt ist, wie die Bedienoberfläche 22 der Schnittstelleneinheit 19 schräg bezüglich der Projektionseinheit 20 im Fahrgastraum 11 ausgerichtet sein kann, wodurch ein Normalenvektor 33 der Bedienoberfläche 22 in einem Neigungswinkel 34, der ungleich 0 ist, bezüglich einer Verbindungslinie 35 zwischen Schnittstelleneinheit 19 und Projektionseinheit 20 ausgerichtet ist.

Diese relative Neigung 36 der Schnittstelleneinheit 19 bezüglich der Projektionseinheit 20 kann durch die Erfassungseinrichtung 31 erfasst und der Bildverarbeitungseinrichtung 32 als Neigungsvektor 37 beschrieben oder signalisiert werden. Der Neigungsvektor 37 kann eine Ausrichtung des Normalenvektors 33 im Raum beschreiben. Der Anzeigeinhalt 21 kann durch die Bildverarbeitungseinrichtung 32 auf der Grundlage eines Originalanzeigeinhalts 38 gebildet werden, zu dem beispielsweise Grafikdaten gespeichert sein können. Eine Darstellung 39 des Originalanzeigeinhalts 38 ist in Fig. 2 ebenfalls beispielhaft dargestellt. Dargestellt ist, wie in der Darstellung 39 des Originalanzeigeinhalts 38 das Bedienmenü 26 unverzerrt mit den Bedienflächen 27 beispielsweise für zwei unterschiedliche Bedienfunktionen F1, F2 repräsentiert und dargestellt sein kann.

Um beim Projizieren des Lichts 23 auf die Bedienoberfläche 22 die optische Verzerrung zu kompensieren, kann durch die Bildverarbeitungseinrichtung 32 mittels einer Vorverzerrungsfunktion 40 aus dem Originalanzeigeinhalt 38 der Anzeigeinhalt 21 erzeugt werden, also entsprechende digitale Bilddaten berechnet werden. In Fig. 2 ist eine Darstellung 41 des vorverzerrten, noch nicht projizierten Anzeigeinhalts 21 dargestellt. Zu sehen ist, dass das Bedienmenü 26 entlang einer Raumrichtung 42 gestaucht dargestellt ist. Die Vorverzerrungsfunktion 40 ergibt sich aus den geometrischen Verhältnissens, wie sie sich für das einfallende Licht 23 auf der Bedienoberfläche 22 aufgrund des Neigungsvektors 37 ergeben. Als Gesetzmäßigkeit kann hier die sogenannte schiefe Parallelprojektion zugrungegelegt werden.

Beim Projizieren dieser gestauchten Darstellung 41 des Originalanzeigeinhalts 38 auf die Bedienoberfläche 22 mittels des Lichts 23 kann sich durch die optische Verzerrung in Form einer Dehnung auf der Bedienoberfläche 22 eine Projektion oder Darstellung ergeben, die der Darstellung 39 des Originalanzeigeinhalts 38 entspricht.

Die Schnittstelleneinheit 19 kann zumindest eine weitere Bedienoberfläche 22' aufweisen, sodass zwei mögliche Bedienoberflächen 22, 22' bereitgestellt sind. Auch die Bedienoberfläche 22' kann einen entsprechenden Normalenvektor 33' aufweisen. Je nachdem, welcher Normalenvektor 33, 33' den kleineren Neigungswinkel 34 hin zur Verbindungslinie 35 aufweist, wird die entsprechende zugehörige Bedienoberfläche 22, 22' zum Projizieren des Anzeigeinhalts 21 ausgewählt. Der Winkel 34 kann beispielsweise mittels der Erfassungseinrichtung 31 ermittelt werden. Zum Erkennen, welche Bedienoberfläche 22, 22' sich wo befindet, kann zumindest ein Wiedererkennungsmerkmal 43 (beispielsweise ein Markierelement 44) an der Schnittstelleneinheit 19 bereitgestellt sein. Im dargestellten Beispiel kann die Erfassungseinrichtung 31 als Sensoreinrichtung 45 zum Erfassen des Wiedererkennungsmerkmals 43 beispielsweise die Kamera TOF nutzen.

Das Bediensystem 18 sieht somit eine Hardware vor, die vorzugsweise eine weiße Bedienoberfläche zum darauf Projizieren einer bedienbaren Benutzerschnittstelle aufweist. Dabei ist diese Bedienoberfläche beweglich, weil sie auf einer portablen Schnittstelleneinheit 19 angeordnet ist. Trotz der Beweglichkeit bleibt die Anzeige der Bedienschnittstelle unverzerrt, was mittels des "dynamic projection mappings" in der beschriebenen Weise erreicht wird.

Durch die Verwendung eines Algorithmus für "dynamic projection mapping" kann eine Bedienoberfläche auf eine (vorzugsweise) einfarbige Fläche projiziert werden. Diese Fläche ist z. B. in der Größe eines Tablets ausgeführt. Diese vorzugsweise nicht ortsfeste Fläche kann frei im Fahrzeug bewegt werden. Durch die beschriebene mögliche Materialwahl kann die Schnittstelleneinheit crashsicher ausgestaltet werden, das heißt sie zerbricht nicht bei einem Unfall oder Crash. Es muss auch keinerlei Elektronik oder Glas verbaut sein.

Die Bedienoberfläche kann durch ihre Form oder durch einen Marker z. B. Kamerabasiert erkannt werden.

Die Bedienhandlungen auf der Bedienoberfläche (z.B. Touchgesten) können durch eine TOF-Kamera oder eine andere Tracking-Technik erfasst werden.

Die Projektion erfolgt durch einen vorzugsweise Beamer/Projektor der Projektionseinheit. Die Projektion wird je nach Ortsänderung der Fläche angepasst. Die Ortsänderung wird dabei ebenfalls z.B. von einer TOF-Kamera oder anderer Tracking-Technik erfasst.

Die verarbeiteten Signale können wiederum die fahrzeugseitigen Fahrzeugkomponenten (z.B. das Infotainment) steuern.

Insgesamt zeigen die Beispiele, wie durch die Erfindung eine portable Schnittstelleneinheit als ein virtuelles Tablet betrieben werden kann.

## Patentansprüche

1. Bediensystem (18) für ein Kraftfahrzeug (10), aufweisend
- eine Schnittstelleneinheit (19) mit einer Bedienoberfläche (22) und
- eine Projektionseinheit (20), die dazu eingerichtet ist, einen Anzeigeinhalt (21) von außen auf die Bedienoberfläche (22) der Schnittstelleneinheit (19) zu projizieren, wobei
- die Schnittstelleneinheit (19) als ein frei im Kraftfahrzeug (10) beweglicher, portabler Gegenstand ausgestaltet ist,
**dadurch gekennzeichnet, dass**
eine Erfassungseinrichtung (31) dazu eingerichtet ist, einen Neigungsvektor (37) einer relativen Neigung (36) der Bedienoberfläche (22) bezüglich der Projektionseinheit (20) zu ermitteln und
eine Bildverarbeitungseinrichtung (32) dazu eingerichtet ist, den Anzeigeinhalt (21) zu erzeugen, indem sie einen Originalanzeigeinhalt (38) mittels einer vorbestimmten Vorverzerrungsfunktion (40) in Abhängigkeit von dem ermittelten Neigungsvektor (37) graphisch verzerrt, wobei die Vorverzerrungsfunktion (40) invers zu einer optischen Verzerrung, die sich beim Projizieren des Anzeigeinhalts (21) auf der Bedienoberfläche (22) aufgrund der Neigung (36) ergibt, eingestellt ist.

2. Bediensystem (18) nach Anspruch 1, wobei die Schnittstelleneinheit (19) mehrere mögliche Bedienoberflächen (22, 22') aufweist und die Erfassungseinrichtung (31) dazu eingerichtet ist, als aktuelle Bedienoberfläche (22) diejenige der möglichen Bedienoberflächen (22, 22') auszuwählen, deren Normalenvektor (33) den kleinsten Neigungswinkel (34) zu einer Verbindungslinie (35) zwischen der Schnittstelleneinheit (19) und der Projektionseinheit (20) aufweist.

3. Bediensystem (18) nach Anspruch 2, wobei jeder der möglichen Bedienoberflächen (22, 22') ein anderer, vorbestimmter Originalanzeigeinhalt (38) zugeordnet ist und die Bildverarbeitungseinrichtung (32) dazu eingerichtet ist, in Abhängigkeit davon, welche der möglichen Bedienoberflächen (22, 22') als aktuelle Bedienoberfläche (22) ausgewählt ist, den zugeordneten Originalanzeigeinhalt (38) auszuwählen.

4. Bediensystem (18) nach einem der vorhergehenden Ansprüche, wobei die Erfassungseinrichtung (31) zumindest ein an der Schnittstelleneinheit (19) bereitgestelltes Wiedererkennungsmerkmal (43) und eine von der Schnittstelleneinheit beabstandete und für das zumindest eine Wiedererkennungsmerkmal (43) sensitive Sensoreinrichtung (45) umfasst und die Sensoreinrichtung (45) dazu eingerichtet ist, den Neigungsvektor (37) durch berührungsloses Detektieren einer Raumlage des zumindest einen Wiedererkennungsmerkmals (43) zu ermitteln, wobei das zumindest eine Wiedererkennungsmerkmal (43) zumindest ein an der Schnittstelleneinheit (19) angeordnetes Markierelement (44) und/oder eine vorbekannte Form der Schnittstelleneinheit (19) umfasst.

5. Bediensystem (18) nach einem der vorhergehenden Ansprüche, wobei eine Eingabeeinrichtung (28) dazu eingerichtet ist, eine Bedieneingabe (25), die ein Benutzer an der Schnittstelleneinheit (19) tätigt, zu erfassen und in Abhängigkeit von einer aktuell betriebenen Bedienfunktion (29) und der erfassten Bedieneingabe (25) ein Steuersignal (30) zum Steuern zumindest einer Fahrzeugkomponente (17) des Kraftfahrzeugs (10) zu erzeugen.

6. Bediensystem (18) nach Anspruch 5, wobei die Eingabeeinrichtung (28) eine TOF-Kamera (TOF) umfasst und dazu eingerichtet ist, die Bedieneingabe (25) anhand von durch die TOF-Kamera (TOF) erzeugten Bilddaten (D), welche eine Relativposition eines Eingabeelements (24) des Benutzers bezüglich der Schnittstelleneinheit (19) beschreiben, zu erfassen und/oder
wobei die Eingabeeinrichtung (28) ein an der Schnittstelleneinheit (19) angeordnetes Touchpad umfasst.

7. Bediensystem (18) nach einem der vorhergehenden Ansprüche, wobei die Schnittstelleneinheit (19) aus einem elastischen Material gebildet ist und/oder einen Schaumstoff und/oder ein Kunstleder aufweist.

8. Bediensystem (18) nach einem der vorhergehenden Ansprüche, wobei die Schnittstelleneinheit (19) in einem Außenprofil ausschließlich gerundete Ecken und Kanten aufweist, deren jeweiliger Rundungsradius größer als 5 Millimeter ist.

9. Bediensystem (18) nach einem der vorhergehenden Ansprüche, wobei die jeweilige Bedienoberfläche (22, 22') weiß ist und/oder wobei die Schnittstelleneinheit (19) als eine Platte mit jeweiliger ebener Bedienoberfläche (22, 22') ausgestaltet ist.

10. Kraftfahrzeug (10), in welchem ein Bediensystem (18) nach einem der vorhergehenden Ansprüche bereitgestellt ist.

## Claims

1. An operating system (18) for a motor vehicle (10), comprising
- an interface unit (19) with an operating surface (22), and
- a projection unit (20), which is configured to project a display content (21) onto the operating surface (22) of the interface unit (19) from the outside, wherein
- the interface unit (19) is designed as a portable object freely movable in the motor vehicle (10),
**characterized in that**
a capturing device (31) is configured to ascertain an inclination vector (37) of a relative inclination (36) of the operating surface (22) with respect to the projection unit (20), and
an image processing device (32) is configured to generate the display content (21) **in that** it graphically distorts an original display content (38) by means of a predetermined predistortion function (40) depending on the ascertained inclination vector (37), wherein the predistortion function (40) is adjusted inversely to an optical distortion, which results on the operating surface (22) upon projecting the display content (21) due to the inclination (36).

2. The operating system (18) according to claim 1, wherein the interface unit (19) comprises multiple possible operating surfaces (22, 22') and the capturing device (31) is configured to select that one of the possible operating surfaces (22, 22') as the current operating surface (22), the normal vector (33) of which has the smallest inclination angle (34) to a connecting line (35) between the interface unit (19) and the projection unit (20).

3. The operating system (18) according to claim 2, wherein a different, predetermined original display content (38) is associated with each of the possible operating surfaces (22, 22'), and the image processing device (32) is configured to select the associated original display content (38) depending on which one of the possible operating surfaces (22, 22') is selected as the current operating surface (22).

4. The operating system (18) according to any one of the preceding claims,
wherein the capturing device (31) includes at least one recognition feature (43) provided at the interface unit (19) and a sensor device (45) spaced from the interface unit and sensitive to the at least one recognition feature (43), and the sensor device (45) is configured to ascertain the inclination vector (37) by non-contact detection of a spatial position of the at least one recognition feature (43), wherein the at least one recognition feature (43) includes at least one marking element (44) arranged at the interface unit (19) and/or a previously known shape of the interface unit (19).

5. The operating system (18) according to any one of the preceding claims,
wherein an input device (28) is configured to capture an operating input (25), which a user performs at the interface unit (19), and to generate a control signal (30) for controlling at least one vehicle component (17) of the motor vehicle (10) depending on a currently actuated operating function (29) and the captured operating input (25).

6. The operating system (18) according to claim 5, wherein the input device (28) includes a TOF camera (TOF) and is configured to capture the operating input (25) based on image data (D) generated by the TOF camera (TOF), which describes a relative position of an input element (24) of the user with respect to the interface unit (19), and/or wherein the input device (28) includes a touchpad arranged at the interface unit (19).

7. The operating system (18) according to any one of the preceding claims,
wherein the interface unit (19) is formed of an elastic material and/or comprises a foamed plastic and/or an artificial leather.

8. The operating system (18) according to any one of the preceding claims,
wherein the interface unit (19) has exclusively rounded corners and edges in an outer profile, the respective fillet radius of which is larger than 5 millimeters.

9. The operating system (18) according to any one of the preceding claims,
wherein the respective operating surface (22, 22') is white and/or wherein the interface unit (19) is designed as a plate with respective flat operating surface (22, 22').

10. A motor vehicle (10), in which an operating system (18) according to any one of the preceding claims is provided.

## Revendications

1. Système de commande (18) pour un véhicule à moteur (10), comportant :
- une unité d'interface (19) ayant une surface de commande (22) et
- une unité de projection (20) configurée pour projeter un contenu d'affichage (21) provenant de l'extérieur sur la surface de commande (22) de l'unité d'interface (19),
- l'unité d'interface (19) étant conçue comme un objet portatif, librement mobile dans le véhicule à moteur (10),
**caractérisé en ce que**
un dispositif de capture (31) est configuré pour déterminer un vecteur d'inclinaison (37) d'une inclinaison relative (36) de la surface de commande (22) par rapport à l'unité de projection (20) et
un dispositif de traitement d'image (32) est configuré pour générer le contenu d'affichage (21) en déformant graphiquement un contenu d'affichage d'origine (38) au moyen d'une fonction de pré-distorsion (40) prédéterminée sur la base du vecteur d'inclinaison (37) déterminé, la fonction de pré-distorsion (40) étant réglée inversement à une distorsion optique qui se produit en raison de l'inclinaison (36) pendant la projection du contenu d'affichage (21) sur la surface de commande (22).

2. Système de commande (18) selon la revendication 1, dans lequel l'unité d'interface (19) comporte plusieurs surfaces de commande possibles (22, 22') et le dispositif de capture (31) est configuré pour sélectionner, en tant que surface de commande actuelle (22), une surface parmi les surfaces de commande possibles (22, 22') dont le vecteur normal (33) a le plus petit angle d'inclinaison (34) par rapport à une ligne de liaison (35) entre l'unité d'interface (19) et l'unité de projection (20).

3. Système de commande (18) selon la revendication 2, dans lequel un autre contenu d'affichage d'origine (38) prédéterminé est affecté à chacune des surfaces de commande possibles (22, 22') et le dispositif de traitement d'image (32) est configuré pour sélectionner le contenu d'affichage d'origine (38) affecté, en fonction de la surface parmi les surfaces de commande possibles (22, 22') qui est sélectionnée en tant que surface de commande actuelle (22).

4. Système de commande (18) selon l'une des revendications précédentes, dans lequel le dispositif de capture (31) inclut au moins une caractéristique de reconnaissance (43) fournie à l'unité d'interface (19) et un dispositif de capteur (45) disposé à distance de l'unité d'interface et sensible à au moins une caractéristique de reconnaissance (43), et le dispositif de capteur (45) est configuré pour déterminer le vecteur d'inclinaison (37) par détection sans contact d'une position spatiale de la au moins une caractéristique de reconnaissance (43), la au moins une caractéristique de reconnaissance (43) incluant au moins un élément de marquage (44) agencé sur l'unité d'interface (19) et/ou une forme déjà connue de l'unité d'interface (19).

5. Système de commande (18) selon l'une des revendications précédentes, dans lequel un dispositif d'entrée (28) est configuré pour capturer une entrée de commande (25) qu'un utilisateur effectue sur l'unité d'interface (19), et pour générer, sur la base d'une fonction de commande en cours d'exécution (29) et de l'entrée de commande (25) capturée, un signal de commande (30) pour commander au moins un composant de véhicule (17) du véhicule à moteur (10).

6. Système de commande (18) selon la revendication 5, dans lequel le dispositif d'entrée (28) inclut une caméra à temps de vol (TOF) et est configuré pour capturer l'entrée de commande (25) au moyen de données d'image (D) générées par la caméra TOF (TOF), qui décrivent une position relative d'un élément d'entrée (24) de l'utilisateur par rapport à l'unité d'interface (19) et/ou
dans lequel le dispositif d'entrée (28) inclut un pavé tactile disposé sur l'unité d'interface (19).

7. Système de commande (18) selon l'une des revendications précédentes, dans lequel l'unité d'interface (19) est formée à partir d'un matériau élastique et/ou comporte une mousse et/ou un cuir artificiel.

8. Système de commande (18) selon l'une des revendications précédentes, dans lequel l'unité d'interface (19) comporte des coins et des bords exclusivement arrondis dans un profil extérieur, dont le rayon d'arrondi respectif est supérieur à 5 millimètres.

9. Système de commande (18) selon l'une des revendications précédentes, dans lequel la surface de commande (22, 22') respective est blanche et/ou dans lequel l'unité d'interface (19) est en forme de plaque, la surface de commande (22, 22') respective étant plane.

10. Véhicule à moteur (10), dans lequel un système de commande (18) selon l'une des revendications précédentes est fourni.
